# EUROPEAN PATENT SPECIFICATION

(11) **EP 1 737 611 B1**
(45) Date of publication and mention of the grant of the patent: **24.09.2008**
(21) Application number: 04726613.5
(22) Date of filing: 08.04.2004
(51) Int. Cl.: B23Q 3/18, B23Q 17/22

(54) **METHOD FOR CENTRING SEMI-FINISHED PARTS WHICH ARE TO UNDERGO MECHANICAL MACHINING**
VERFAHREN ZUR ZENTRIERUNG VON HALBZEUGEN, DIE MASCHINELL BEARBEITET WERDEN SOLLEN
PROCEDE DE CENTRAGE DE PIECES SEMI-FINIES DEVANT SUBIR UN MECANISAGE

(43) Date of publication of application: 03.01.2007
(73) Proprietor: Maus S.p.A., 35011 Campodarsego (IT)
(72) Inventor: SAMMARTIN, Roberto, I-35030 Selvazzano Dentro (IT)
(74) Representative: Fabris, Stefano
(86) International application number: PCT/IT2004/000187
(87) International publication number: WO 2005/097404

(56) References cited:
- WO-A-96/26843
- WO-A-03/076130
- DE-A- 10 209 371
- US-A- 3 711 106

## Description

### Technical field

The present invention relates to a method for centring semi-finished parts which are to undergo mechanical machining, as described in the preamble to main claim 1.

### Technological background

The invention falls particularly, though not exclusively, within the specific technical field of the centring of semi-finished parts which are to undergo mechanical machining, for example turning or other surface finishing operations, for the purpose of centring a part relative to the geometrical axis of rotation of the fixtures for securing the workpiece typically provided in conventional machining centres. Although the invention can be used in any type of machining centre requiring the centring of semi-finished products with substantially axially symmetric geometry, it has been designed with particular reference to the centring of semi-finished vehicle wheels of light alloy, particularly aluminium alloy, the term "wheel" being used to denote the entire rim and wheel structure, generally obtained as a semi-finished casting which then undergoes subsequent mechanical machining operations of turning and surface finishing.

For this purpose centring of the semi-finished part is required, an operation which is commonly carried out by means of a three-point centring device in which three centring units equipped with jaws, arranged 120° degrees apart, are moved along guides which are radial relative to the geometrical axis of the device to lock the semi-finished product in a centred position. A method for centring having the features outlined above are known from DE10209371. A typical known application makes provision for the three jaws to be self-centring, that is connected to each other by gearing so that their movement is synchronised (with the same travel to and from the axis of the device) along said directions, and consequently lock the part in a centred position relative to the geometrical axis of the centring device.

### Description of the invention

A main purpose of the present invention is to make available a method for centring semi-finished products which offers greater versatility for the centred positioning of semi-finished parts, for example by enabling parts of different dimensions and sizes to be centred without requiring replacement of the centring components and at the same time providing speed and reliability and also accuracy in the centred positioning of the part.

Another purpose is to define a method which enables the roundness characteristic of the semi-finished product to be measured at the centring points so that the part may be scrapped in the event that the value measured exceeds a pre-established tolerance threshold.

Yet another purpose is to produce a centring method such as to improve accessibility to the part once it is arranged in a centred position, to facilitate and speed up all the operations required in the subsequent steps of mechanical machining.

These and other purposes which will be shown more clearly in what follows are achieved by a method for the centring of semi-finished parts produced in accordance with the claims which follow.

### Brief description of the drawings

The characteristics and advantages of the invention will become clear from the following detailed description of a preferred example of embodiment, provided purely by way of non-limiting example, with reference to the appended drawings in which:
- figure 1 is a schematic view in front elevation of a centring device operating according to the method disclosed by the present invention,
- figure 2 is a schematic plan view of the device in figure 1,

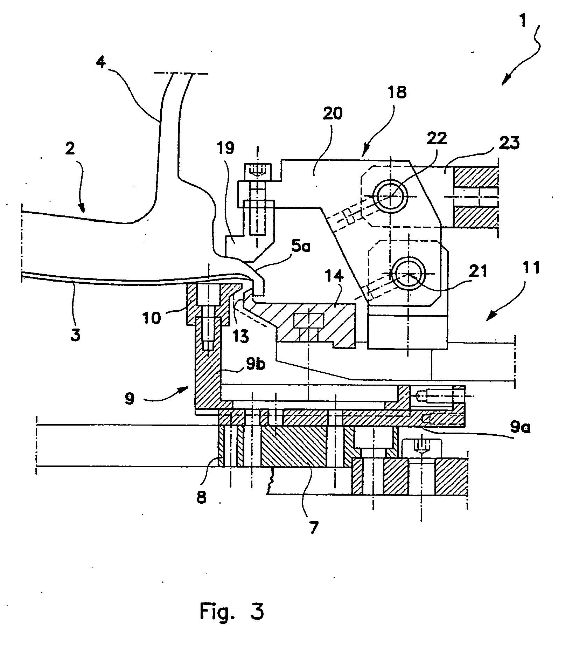

- figure 3 is a view at an enlarged scale of a detail of the preceding drawings, identified by the arrow A in figure 1.

### Preferred mode of embodiment of the invention

With reference to the drawings cited, the number 1 indicates as a whole a device for centring semi-finished parts arranged to undergo subsequent mechanical machining, operating according to the method disclosed by the present invention. This method is described in what follows with particular reference to semi-finished vehicle wheels 2 of light alloy, in particular aluminium alloy, it being understood that this application represents a preferred non-limiting choice, the invention being applicable just as effectively in all cases where there is a requirement to centre parts having an axially symmetric form of geometry.

Moreover, the term "wheel" is used in the present context to denote the whole structure of a rim and wheel for vehicles, typically having a front portion 3 arranged to be drilled (with the provision of through holes for attaching the wheel to the vehicle hub) from which there rises a wall 4 of cylindrical form having opposite edges 5a, 5b which are circumferential and also project radially to form the surface for fitting the tyre to the wheel.

The device 1 comprises a frame with supporting structure 6 on which is mounted a plate 7 having a central through opening 8. Also rising from the plate 7 are a plurality of support elements 9 designed to constitute seatings for the wheel 2, as will become clear in what follows. The support elements 9 are arranged circumferentially at a regular angular pitch and can be moved in an adjustable manner along directions which are radial relative to the geometrical central axis of the device, indicated by X in the drawings. In this way, the seating points for the wheel 2 on the supports are adjustable for limited radial travel. The adjustability of the supports enables semi-finished products of different diameters to be accommodated in the device, within a preselected range of values. More particularly, each support element 9 comprises a first portion 9a guided on the plate 7 and capable of being secured to it, for example by screw means, and a second portion 9b, rising at right angles from the first portion 9a comprising at the free end a head 10 for the seating contact with the wheel 2, in particular to provide seating for the front portion 3 of the wheel in a circumferential area close to the edge 5a.

A preferred choice provides for the arrangement of six support elements 9 fitted at a regular angular pitch to the plate 7. The heads 10 therefore form seating surfaces for the wheel 2 forming as a whole an imaginary seating plane in which the wheel has limited freedom of movement.

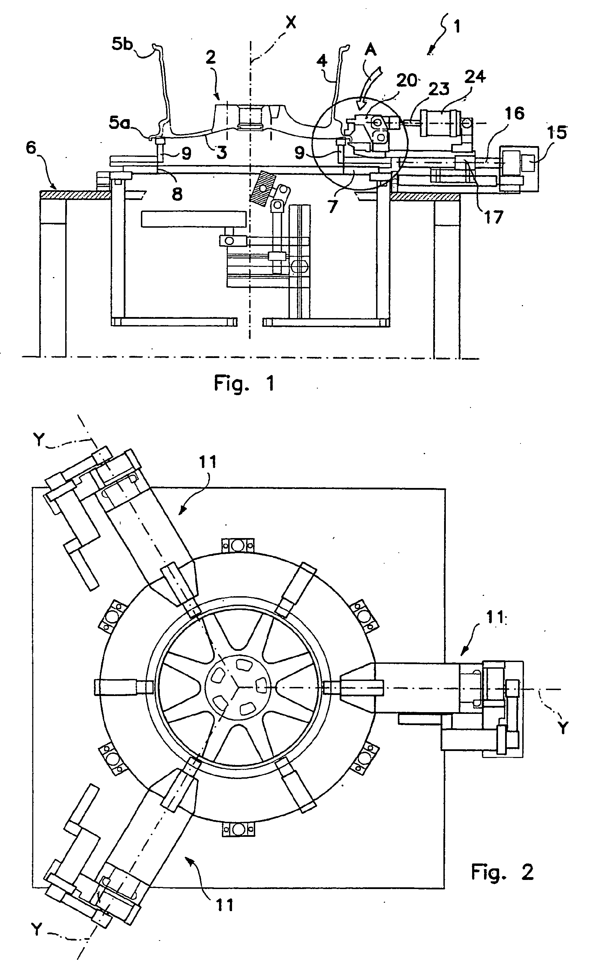

The device 1 is also provided with three centring elements, all indicated by the number 11, arranged at 120° from each other and each comprising a respective slide 12 guided radially relative to the axis X. The radial directions of the centring units 11, indicated by the axes Y in figure 2, are conveniently offset at an angle relative to the directions of radial movement of the support elements 9 to avoid interference when the device is operating.

The centring units 1 are structurally identical and therefore only one of them will be described in detail in what follows.

The slide 12 comprises at one of its ends a projection 13 having an extension such as to bear against the edge 5a of the wheel as a result of the radial movement of the slide and which is therefore capable of pulling the wheel away from the axis X. The projection 13 may conveniently constitute the end of a small block 14 removably attached to the slide 12.

For the movement of each slide 12 a respective motor 15 is provided (the motors being operated independently of each other) associated with respective transmission means capable of converting the rotational motion of the motor 25 into a translational movement of the slide 12. Each slide 12 is also provided with means for measuring its position (not shown), for example of the encoder type for measuring the distance travelled as a function of the rotation of the motor.

More particularly, provision is made for each motor 15 to drive in rotation a threaded spindle 16 which is engaged with a suitable coupling in a female thread made internally in a bush formation 17 integral with the slide 12. In this way, for a preset angular rotation of the motor 15 (and therefore of the spindle 16) a corresponding translational movement of the bush 17 (and therefore of the slide 12) is generated along the corresponding radial direction Y.

Also provided on each slide 12 are means 18 for locking the part being centred, which comprise a locking foot 19 attached to an arm 20 hinged at 21 to the slide 12. Also hinged to the arm 20 at 22 is the end of the operating spindle 23 of a jack 24 fitted on board the slide 12. By means of the lever arm formed between the hinging points 21 and 22, the locking foot 19 is moved away from and towards an operating position in which it is pressed onto the wheel 2 at the edge 5a in order to provide relative locking for it.

The method of centring according to the invention provides for the semi-finished wheel 2 initially to be seated on the support elements 9 with the heads 10 and the front portion 3 of the wheel in contact with each other. In this step the centring elements 11 are moved back towards the axis X with equal radial positioning relative to this axis, but such that the projections 13 are positioned between the axis X and the peripheral edge 5 of the wheel.

It should be noted that in this step the semi-finished wheel 2 is positioned on the supports 9 simply by seating, possibly with an offset between the axis X and the geometrical axis of axial symmetry of the wheel, centring being obtained subsequently as made clear in what follows.

In a subsequent step provision is made for the three centring units 11 to be moved along the respective radial directions Y away from the axis X, synchronised with each other, by operation of the respective motors 15. Preferably the motors selected are of the controlled movement type, so that rotation of the motor 15 and consequently the translational travel of the respective slide 12 associated with it can be accurately controlled and adjusted.

The method disclosed by the invention also makes provision for measuring the torque developed by each motor 15 in the radial travel of each centring unit 11 between the initial non-operating condition and the condition in which the projection 13 bears against the edge 5a of the wheel, until the wheel reaches a centred position.

Assuming that the part is in a centred condition, by reason of the axial symmetry and the relative arrangement of the centring units, the torque developed by the three motors must be substantially equal, for reasons of general symmetry of the system, and the position reached is that in which the wheel is centred relative to the geometrical axis X.

According to the invention, provision is made to preset a torque value defining a threshold which, when reached (or exceeded) in all three motors 15 of the corresponding centring devices 11, is an indication that a centring condition has been reached. The pre-selected value of the above-mentioned threshold must clearly take account of and be greater than those torque values (or ranges of values) necessarily developed to overcome friction and inertia encountered by the centring units 11 in the process of moving the wheel until the centred position is reached.

In this step it may happen that one or two centring units 11 reach the wheel first and bear against and move it relative to the others. In this case, the resisting torque developed by these centring units 11 is in any case less than the pre-selected threshold value and therefore the movement of the centring units 11 is continued further until the condition in which all three centring units bear against the wheel at the respective centring points and the resisting torque generated by the motors 15 increases until the preset threshold is reached (and possibly exceeded). When this condition is reached, the movement of the centring units 11 is halted and the locking means 18 are activated with each foot 19 swinging onto the wheel 2 to bear against the wheel at a preset pressure (generated by the jack 24) in opposition to the reaction exerted by the support elements 9.

According to the invention, it is also possible to measure the positioning distances reached in the respective amounts of travel of the three centring units (by means of the above-mentioned measuring means) and to check whether the differences calculated fall within a preset range of tolerance values. If they do, the machining cycle may continue as usual or may be repeated with a different orientation of the wheel, as made clear in what follows, or the wheel may be scrapped.

Provision may also be made to measure the values of the torque developed by the motors 15 at pre-selected intervals of time or space in the travel of each centring unit until the centring condition is reached in which all the torque values measured are equal to or greater than the pre-established threshold value. In this connection, an electronic unit may conveniently be arranged to receive as input the signals corresponding to the torque values measured on the three motors, comparing these signals with the pre-selected threshold value and generating signals to halt the centring unit if necessary depending on the outcome of the comparison made.

In a further step in the method, where appropriate devised in addition to the above-mentioned main steps, provision may be made to halt the centring units, return these to the initial non-operating condition (close to the X axis) and repeat the centring steps after the wheel 2 has been given a different orientation about its geometrical axis, by rotating the wheel by a preselected angle. This method may conveniently be used when, because of marked distortion in the semi-finished product, the centring position is not reached within the limits of the permissible radial travel of the centring units. This is because it may happen that two centring units reach and bear against the wheel, but the third, assuming that there is marked distortion of the wheel, does not manage to bear against the wheel before the two above-mentioned centring units reach a position which is the limit of permissible radial travel. In this case, provision may be made to allow the third centring unit to travel a further preset amount (depending on the permissible tolerance), and when this is reached, the resisting torque associated with it is measured once again. Depending on the torque value measured, the centring obtained may be accepted or, if not, the wheel is given a new orientation or is scrapped because of unacceptable distortion or defective roundness.

The outcome of this is that a new angular orientation of the wheel (by means of pre-selected rotation about the axis of the wheel) may provide a different, more accurately centred position for the semi-finished product. Further changes in the orientation of the wheel may be tried, with the centring steps being repeated, if centring is difficult to achieve in a single positioning attempt by reason of particular distortion (generated in the casting process) present in the semi-finished product.

It should be noted how the centring device operating according to the method disclosed by the invention may be built to a size such as to ensure ample accessibility to the semi-finished product, in particular to the front portion 3 of the wheel, through the central opening 8 in the support frame 6. This accessibility is also shown to be advantageous if holes have to be drilled at the edge of the wheel 5a for assembling the front portion 3 to the cylindrical body of the wheel (the wall 4 and edges 5a, 5b) where these parts begin as structurally independent and are subsequently assembled.

This easier accessibility therefore makes it possible to perform successive steps in mechanical machining of the part with particular rapidity and without requiring further positioning of the semi-finished product.

The invention thus achieves the proposed aims, offering numerous advantages compared with known solutions.

A principal advantage lies in the fact that with the centring method and device according to the invention, improved flexibility and versatility are obtained in the operations of centring semi-finished parts, in particular obtaining speed and accuracy in placing parts in a centred position even where there are relative differences in dimensions and sizes between the parts (for example wheels having different diameters).

Another advantage consists in the improved accessibility to the semi-finished part offered by the invention which makes it possible, among other things, to carry out drilling in the peripheral area of the flange (at the edge close to the front portion) to produce the attachment holes in the case of wheels produced in two parts.

Another advantage still lies in the improved accuracy obtainable in centring the part because of the possibility of rapidly repeating the steps in centring the part starting from a different orientation of the part, thus achieving greater overall accuracy.

## Claims

1. A method for centring semi-finished parts (2) which are to undergo mechanical machining, comprising the steps of:
- preparing a centring device (1) comprising three centring elements (11) spaced apart angularly at a regular pitch, capable of coming into contact with the semi-finished part (2) to move it to a centred position, each of said centring elements (11) being movable along a preset radial direction (Y), said radial directions intersecting each other at the geometrical axis (X) for centring the part,
- moving each centring element (11) along the corresponding radial direction (Y), with controlled and independent moving of each centring element relative to the others, by means of respective drive means (15) associated with respective means of transmitting the motion (16, 17) capable of converting the rotation motion of each drive means (15) into translational motion of the corresponding centring element (11),
- adjusting the position of each centring element (11) as a function of the torque developed by the respective drive means (15) until a centring condition is reached in which all the torque forces developed by the drive means of the corresponding centring elements are greater than or equal to a preset threshold value indicating that the desired centring position of the part (2) relative to the geometrical axis (X) of the centring device has been reached, the torque developed at each drive means (15) associated with the respective centring element (11) being measured during the operating travel of the latter, and the torque values measured being compared with said preset threshold value, so as to halt the movement of the centring elements (11) upon reaching the condition in which all three torque values measured are equal to or greater than the preset threshold value,
- the centring elements (11) being moved in synchronism along the respective directions of radial movement away from the geometrical axis, so that radial movement occurs simultaneously along the respective directions, measuring means being provides to measure the positioning distances reached in the respective amounts of travel of the three centring elements (11) along the respective radial directions, **characterized in that** provision is made for the step of halting the movement of the centring elements (11) upon reaching the condition in which the preset threshold value is not reached by all three centring devices within a pre-selected time interval, or within a pre-selected radial travel of the centring devices, and provision is made for the step of repeating the sequence of movement of the centring units, after the part (2) has first been rotated angularly about its main axis by a preselected angle.

2. A method of centring according to claim 1 in which said centring elements (11) are moved along said respective radial directions (Y) away from the geometrical axis (X) of the device towards a position where they bear against the semi-finished part (2) to move it along the respective radial direction until the centring position is reached.

3. A method according to claim 1 or 2, in which, prior to the movement of the centring elements (11) provision is made for the step of seating the part (2) on a plurality of support elements (9) arranged to allow limited freedom of movement of the part (2) in a plane perpendicular to the geometrical axis of the device.

4. A method according to claim 3, in which said support elements (9) are spaced apart angularly relative to the angular position of the centring elements (11).

5. A method according to claim 3 in which provision is made for the step of locking the part once the desired centring position is reached, at the area of contact between each centring element and the part, by means of locking forces exerted in opposition to the reaction of said support elements.

## Patentansprüche

1. Verfahren zur Zentrierung von Halbzeugen (2), die maschinell bearbeitet werden sollen, umfassend die Schritte:
- Vorbereiten einer Zentriervorrichtung (1) mit drei Zentrierelementen (11), die winkelig mit gleichmäßigem Abstand voneinander beabstandet sind, die mit dem Halbzeug (2) in Kontakt gelangen kann, um dieses zu einer zentrierten Position zu bewegen, wobei jedes der Zentrierelemente (11) entlang einer vorbestimmten radialen Richtung (Y) beweglich ist, wobei sich die radialen Richtungen an der geometrischen Achse (X) zum Zentrieren des Halbzeugs schneiden,
- Bewegen jedes Zentrierelements (11) entlang der entsprechenden radialen Richtung (Y) mit gesteuerter und unabhängiger Bewegung jedes Zentrierelements in Bezug auf die anderen mittels entsprechender Antriebseinrichtungen (15), die mit entsprechenden Einrichtungen (16, 17) zum Übertragen der Bewegung verbunden sind, welche die Drehbewegung jeder Antriebseinrichtung (15) in eine Verschiebungsbewegung des entsprechenden Zentrierelements (11) umwandeln können,
- Einstellen der Position jedes Zentrierelements (11) als eine Funktion des von der jeweiligen Antriebseinrichtung (15) erzeugten Drehmoments, bis ein Zentrierzustand erreicht ist, bei dem alle von der Antriebseinrichtung der entsprechenden Zentrierelemente erzeugten Drehmomente größer oder gleich einem vorbestimmten Schwellenwert sind, der anzeigt, dass die gewünschte Zentrierposition des Halbzeugs (2) in Bezug auf die geometrische Achse (X) der Zentriervorrichtung erreicht wurde, wobei das an jeder Antriebseinrichtung (15), die mit dem entsprechenden Zentrierelement (11) verbunden ist, erzeugte Drehmoment während der Betriebsbewegung des Letzteren gemessen wird und die Drehmomentwerte mit dem vorbestimmten Schwellenwert verglichen werden, um so die Bewegung der Zentrierelemente (11) beim Erreichen des Zustands, bei dem alle drei gemessenen Drehmomentwerte gleich oder größer als der vorbestimmte Schwellenwert sind, anzuhalten,
- wobei die Zentrierelemente (11) synchron entlang der entsprechenden Richtungen der radialen Bewegung weg von der geometrischen Achse bewegt werden, so dass die radiale Bewegung gleichzeitig entlang der entsprechenden Richtungen auftritt, wobei eine Messeinrichtung vorgesehen ist, um die Positionierungsentfernungen, die bei den entsprechenden Wegstrecken der drei Zentrierelemente (11) entlang der entsprechenden radialen Richtungen erreicht werden, zu messen, **dadurch gekennzeichnet, dass** eine Vorkehrung getroffen wird für den Schritt des Anhaltens der Bewegung der Zentrierelemente (11) bei Erreichen des Zustands, bei dem der vorbestimmte Schwellenwert innerhalb eines vorab ausgewählten Zeitraums oder innerhalb eines vorab ausgewählten radialen Bewegungswegs der Zentriervorrichtungen nicht von allen drei Zentriervorrichtungen erreicht wird, und eine Vorkehrung für den Schritt des Wiederholens des Bewegungsablaufs der Zentriereinheiten getroffen wird, nachdem das Halbzeug (2) zuerst winkelig um seine Hauptachse um einen vorab ausgewählten Winkel gedreht wurde.

2. Verfahren zum Zentrieren nach Anspruch 1, bei dem die Zentrierelemente (11) entlang der entsprechenden radialen Richtungen (Y) weg von der geometrischen Achse (X) der Vorrichtung hin zu einer Position bewegt werden, in der sie gegen das Halbzeug (2) drücken, um es entlang der entsprechenden radialen Richtung zu bewegen, bis die Zentrierposition erreicht ist.

3. Verfahren nach Anspruch 1 oder 2, bei dem vor der Bewegung der Zentrierelemente (11) eine Vorkehrung getroffen wird für den Schritt des Setzens des Halbzeugs (2) auf eine Vielzahl von Stützelementen (9), die so angeordnet sind, dass sie eine begrenzte Bewegungsfreiheit des Halbzeugs (2) in einer Ebene senkrecht zur geometrischen Achse der Vorrichtung erlauben.

4. Verfahren nach Anspruch 3, bei dem die Stützelemente (9) in Bezug auf die Winkelposition der Zentrierelemente (11) winkelig voneinander beabstandet sind.

5. Verfahren nach Anspruch 3, bei dem eine Vorkehrung getroffen ist für den Schritt des Feststellens des Halbzeugs an dem Kontaktbereich zwischen jedem Zentrierelement und dem Halbzeug mittels Feststellkräften, die entgegen der Reaktion der Stützelemente ausgeübt werden, sobald die gewünschte Zentrierposition erreicht ist.

## Revendications

1. Procédé de centrage de pièces semi-finies devant subir un façonnage mécanique, comprenant les étapes suivantes :
- préparation d'un dispositif de centrage (1) comprenant trois éléments de centrage (11) espacés angulairement les un des autres par une pas régulier, capables de venir au contact de la pièce semi finie (2) afin de la déplacer vers une position centrée, chacun desdits éléments de centrage (11) étant mobile le long d'une direction radiale prédéfinie (Y), lesdites directions radiales se recoupant entre elles à l'axe géométrique (X) de centrage de la pièce,
- déplacement de chaque élément (11) le long de l'axe radial (Y) correspondant, avec un déplacement contrôlé et indépendant de chaque élément de centrage par rapport aux autres, par des moyens d'entraînement (15) respectifs associés à des moyens de transmission du mouvement (16, 17) respectifs, capables de convertir le mouvement de rotation de chaque moyen d'entraînement (15) en un mouvement de translation de l'élément de centrage (11) correspondait,
- ajustement de la position de chaque élément de centrage (11) en fonction du couple développé par les moyens d'entraînement respectifs jusqu'à ce qu'une condition de centrage soit atteinte à laquelle tous les couples développés par les moyens d'entraînement (15) sont plus grands que ou égaux à une valeur seuil préréglée indiquant que la position de centrage désirée pour la pièce (2) par rapport à l'axe géométrique (X) a été atteinte, le couple développé par chaque moyen d'entraînement (15) associé à l'élément de centrage (11) respectif étant mesuré tout au long du trajet opérationnel de ce dernier, et les valeurs de couple mesurées étant comparées avec ladite valeur seuil préréglée afin d'arrêter le mouvement des éléments de centrage (11) lorsque la condition où toutes les trois valeurs de couple mesurées sont plus grandes que ou égales à la valeur seuil préréglée,
- les éléments de centrage (11) étant déplacés le long des directions respectives de mouvement radial à partir de l'axe géométrique, de sorte que le mouvement radial se fasse simultanément le long des directions respectives, des moyens de mesure étant fournis afin de mesurer les distances de positionnement atteintes au vu des quantités de trajet des trois éléments de centrage (11) le long des directions radiales respectives, **caractérisé en ce qu'**une disposition est prise afin d'arrêter le mouvement des éléments de centrage (11) lorsque la condition dans laquelle la valeur seuil préréglée n'est pas atteinte par les trois dispositifs de centrage dans un intervalle de temps présélectionné, ou dans un intervalle de distance radiale présélectionné des dispositifs de centrage, et qu'une disposition est prise afin de répéter la séquence de mouvement des unités de centrage après que la pièce (2) ait été tournée angulairement autour de son axe principal d'un angle présélectionné.

2. Procédé de centrage selon la revendication 1 **caractérisé en ce que** lesdits éléments de centrage (11) se déplacent le long de ladite direction radiale respective (Y) en partant de l'axe géométrique (X) du dispositif vers une position où ils appuient contre la pièce semi-finie (2) afin de la déplacer le long la direction radiale respective jusqu'à ce qu'une position de centrage soit atteinte.

3. Procédé selon les revendications 1 ou 2, **caractérisé en ce qu'**avant le déplacement des éléments de centrage (11) une disposition est prise afin de placer la pièce (2) sur une pluralité d'éléments de support (9) disposés afin de permettre une liberté de mouvement limitée de la pièce (2) dans un plan perpendiculaire à l'axe géométrique du dispositif.

4. Procédé selon la revendication 3, **caractérisé en ce que** les éléments de support (9) sont espacés angulairement en relation avec la position angulaire des éléments de centrage (11).

5. Procédé selon la revendication 3, **caractérisé en ce qu'**une disposition a été prise pour l'étape de verrouillage de la pièce une fois que la position de centrage souhaité est atteinte, à la zone de contact entre les éléments de centrage et la pièce, au moyen de forces de verrouillage exercées en opposition à la réaction desdits éléments de contact.
